# EUROPEAN PATENT SPECIFICATION

(11) **EP 4 267 381 B1**
(45) Date of publication and mention of the grant of the patent: **05.02.2025**
(21) Application number: 21843777.0
(22) Date of filing: 21.12.2021
(51) Int. Cl.: B29D 30/00, B29D 30/26

(54) **METHOD AND GRIPPING APPARATUS FOR GRIPPING A TYRE RING STRUCTURE**
VERFAHREN UND GREIFVORRICHTUNG ZUM GREIFEN EINER REIFENRINGSTRUKTUR
PROCÉDÉ ET APPAREIL DE PRÉHENSION PERMETTANT DE SAISIR UNE STRUCTURE DE PNEU ANNULAIRE

(30) Priority: 24.12.2020 IT 202000032381
(43) Date of publication of application: 01.11.2023
(73) Proprietor: Pirelli Tyre S.p.A., 20126 Milano (IT)
(72) Inventor: DE COL, Christian, 20126 Milano (IT); BROGGI, Francesco, 20126 Milano (IT); CONTI, Davide, 20126 Milano (IT)
(74) Representative: Vittorangeli, Lucia
(86) International application number: PCT/IB2021/062070
(87) International publication number: WO 2022/137102

(56) References cited:
- CN-A- 109 263 100
- US-A- 5 441 587
- US-A1- 2012 256 434

## Description

The present invention relates to a method for grasping an annular tyre structure and a grip apparatus for grasping an annular tyre structure.

A tyre for vehicle wheels generally comprises a carcass structure comprising at least one carcass ply having respectively opposite ends engaged with respective anchoring annular structures, integrated in the zones normally identified with the name "beads", having an inner diameter substantially corresponding to a so-called "fitting diameter" of the tyre on a respective mounting rim.

An air impermeable coating layer, normally termed "liner", can cover the inner surfaces of the carcass structure and hence of the tyre.

The carcass structure is associated with a belt structure which can comprise one or more belt layers, situated in radial superimposition with respect to each other and with respect to the carcass ply, having metallic or textile reinforcement cords with cross orientation and/or substantially parallel (at 0 degrees) with respect to the circumferential extension direction of the tyre.

In radially outer position with respect to the belt structure, a tread band is applied, it too made of elastomeric material like other constituent components of the tyre.

Respective sidewalls made of elastomeric material are also applied in axially outer position with respect to the lateral surfaces of the carcass structure, each extended from one of the lateral edges of the tread band up to the respective anchoring annular structure at the beads.

In a process for building the green tyre, provision can be made for separately attaining a so-called "carcass sleeve" and a so-called "outer sleeve".

In order to make the carcass sleeve, one or more carcass plies are applied on a building drum. The anchoring annular structures are fit or formed on the opposite end flaps of the carcass ply or plies, which are subsequently turned up around the annular structures themselves so as to enclose them in a kind of loop. Before terminating the building of the carcass sleeve, at least one portion of the sidewalls can be applied on the carcass ply/plies.

In order to make the outer sleeve, one or more belt layers are applied on a second drum or auxiliary drum in mutual radial superimposition. The tread band and possibly at least one portion of the sidewalls is applied in radially outer position to the belt layer/layers.

The outer sleeve is then picked up from the auxiliary drum in order to be coupled to the carcass sleeve.

The outer sleeve is for such purpose coaxially arranged around the carcass sleeve. Subsequently, the carcass ply or plies are shaped according to a toroidal configuration by means of mutual axial approaching of the beads and simultaneous introduction of pressurised fluid within the carcass sleeve, so as to cause a radial dilation of the carcass plies up to making them against the radially inner surface of the outer sleeve.

The assembly of the carcass sleeve with the outer sleeve can be actuated on the same drum used for making the carcass sleeve, in which case one speaks of "single-stage building process" or "unistage process".

Building processes are also known of so-called "two-stages" type, in which a so-called "first stage drum" is employed for making the carcass sleeve, while the assembly between carcass sleeve and outer sleeve is actuated on a so-called "second stage drum" or "shaping drum" onto which the carcass sleeve picked up from the first stage drum and, subsequently, the outer sleeve picked up from the auxiliary drum are transferred.

Following the building of the green tyre, a moulding and vulcanisation treatment is executed that is aimed to determine the structural stabilisation of the tyre through crosslinking of the elastomeric compositions as well as imparting on the same, if requested, a desired tread design and possible distinctive graphic marks at the sidewalls of the tyre.

In all the building and/or vulcanisation steps, a transfer is therefore provided of at least one annular tyre structure.

With "annular tyre structure" it is intended an annular structure attained during the building process of a green tyre, which comprises one or more components of the tyre, and which is extended circumferentially around a tyre axis which, with tyre vulcanised, coincides with the rotation axis of the tyre itself. For example, the annular tyre structure can be the carcass sleeve, the outer sleeve, the green tyre or any one annular part thereof attained during the relative building process.

With "grip diameter" of an annular tyre structure, it is intended the outer diameter (maximum size) of said annular tyre structure.

With "carcass sleeve" it is intended at least one carcass ply associated with anchoring annular structures.

With "outer sleeve" it is intended at least one or more belt layers and the tread band.

With "tyre axis" it is intended an axis which, in the vulcanised tyre, corresponds with the rotation axis of the tyre itself and which, in the relative annular tyre structure, corresponds with the axis around which the annular tyre structure itself is extended.

With "shoe" it is intended a movable element adapted to be abutted against the radially outer surface of the annular tyre structure in order to grasp it.

With "feeler" it is intended a fixed or movable element of the shoe intended to come into contact with the radially outer surface of the annular tyre structure.

With "grip axis" it is intended the axis circumferentially around which, in grip conditions, the aforesaid feelers are circumferentially distributed.

The term "radial" and the expression "radially inner/outer" are used with reference to the radial direction of the grip apparatus and/or of the annular tyre structure, i.e. to a direction perpendicular to the grip axis of the grip apparatus and/or to the tyre axis of the annular tyre structure.

The term "axial" and the expression "axially inner/outer" are used with reference to the axial direction of the grip device and/or of the annular tyre structure, i.e. to a direction parallel to the grip axis of the grip apparatus and/or to the tyre axis of the annular tyre structure.

The terms "circumferential" and "circumferentially" are used with reference to the annular extension of the grip apparatus and/or of the annular tyre structure.

With the term "elastomeric material" it is intended to indicate a composition comprising at least one elastomeric polymer and at least one reinforcement filler. Preferably, such composition also comprises additives such as, for example, a crosslinking agent and/or a plasticiser. Due to the presence of the crosslinking agent, through heating such material can be crosslinked, so as to form the final manufactured product.

CN109263100A discloses a tread transfer ring comprising a ring body and tread clamping blocks evenly distributed in the circumferential direction of the ring body.

CN104943212A describes a transfer ring comprising a right ring portion and a left ring portion which are relatively opened and closed with respect to each other.

KR20110072180A describes a transfer apparatus comprising a fixing unit coupled to a main body of the transfer apparatus and a retention part that supports the outer circumferential surface of the green tyre. A visible retention part is connected to the retention part by means of an intermediate connection. A cylinder is mounted between the variable retention part and the fixing unit. The Applicant has observed that the apparatuses of the type described in CN104943212A does not allow being adapted to any size and/or geometric characteristic of the annular tyre structures, for example dictated by the fitting diameter of the tyre, since the two half-parts constituting it are sized on an average use diameter. The Applicant has also observed that, in the case of variations, sometimes even small, of the dimensions and/or of the geometric characteristics in the passage from one production batch to another, the apparatuses such as those described in CN104943212A require the substitution of the two half-parts and thus the arrangement and management of a plurality of half-parts with different diameters, thus increasing the arrangement and management costs of the plant, the necessary spaces and the setting times of the plant itself. Such aspects are further emphasized in the case of automated and highly diversified productions of numerous small batches of tyres characterized by dimensions and/or geometric characteristics that are even quite different from each other.

The Applicant has further observed that in the case of small variations of the dimensions and/or geometric characteristics of the annular tyre structures, there is the tendency to not substitute the two half-parts since these are set on an average diameter, encountering an unsatisfactory gripping action that can cause distortions or deformations of the annular tyre structure which, being non-vulcanised, is substantially at a plastic state, therefore potentially deformable. Such distortions or deformations can negatively affect the coupling precision with other parts of the tyre being processed, and consequently also the quality of the final product.

The Applicant has therefore identified the opportunity to simplify the production processes by automating the step of adjusting the parts that constitute the grip apparatus.

In this perspective, the Applicant has observed that also in an apparatus attained as in KR20110072180A, there is an unsatisfactory gripping action due to the fact that the zone of interaction between the tyre and the retention part or the variable retention part changes as a function of the relative position between these two parts.

The Applicant has therefore perceived that by at least partially uncoupling the actual contact zones (feelers) of a grip apparatus with respect to the half-parts (shoes) thereof which grasp the annular tyre structure, it is possible to obtain solutions that are satisfactory for flexibility of use and set-up times during the building of said tyres.

The Applicant has finally found that it is possible to facilitate a more precise and stable engagement between a grip apparatus and an annular tyre structure by arranging shoes associated with feelers and adjusting the relative position of the feelers of each shoe so as to arrange them along an adjustment circumference having diameter equal to the diameter of a radially outer surface of the annular tyre structure.

In accordance with a first aspect, the invention relates to a method for grasping an annular tyre structure.

Preferably provision is made for, according to an action a), arranging an annular tyre structure which is extended circumferentially around a tyre axis and having a radially outer surface having, in a plane perpendicular to said tyre axis, a first grip diameter.

Preferably provision is made for, according to an action b), arranging a grip apparatus comprising at least two shoes, each shoe comprising at least two feelers circumferentially distributed around a grip axis and each having a contact zone corresponding to a portion of the feeler directed towards the grip axis. Preferably provision is made for, according to an action c), adjusting the relative position of the feelers of each shoe in a manner such that, in a plane perpendicular to the grip axis, the contact zones of the feelers of a shoe are tangent to a same first adjustment circumference having a diameter equal to said first grip diameter, said first adjustment circumference being adapted to be superimposed on the radially outer surface of the annular tyre structure.

Preferably provision is made, according to an action d), relatively positioning said grip apparatus and said annular tyre structure in a manner such that said shoes are circumferentially around said annular tyre structure.

Preferably provision is made, according to an action e), for closing the shoes against the annular tyre structure until the contact zones of the feelers grasp the annular tyre structure, being abutted against the radially outer surface.

In accordance with a second aspect, the invention relates to a grip apparatus for grasping an annular tyre structure having a radially outer surface.

Preferably a support structure carrying at least two shoes is provided for.

Preferably, each shoe has at least two feelers circumferentially distributed around a grip axis, each feeler having a contact zone corresponding to a portion of the feeler directed towards the grip axis.

Preferably, each shoe comprises an adjustment device configured for adjusting the relative position of said at least two feelers in a manner such that in a plane perpendicular to the grip axis, the contact zones of the feelers of a shoe are tangent to a same first adjustment circumference having a diameter equal to a first grip diameter of said annular tyre structure, said first adjustment circumference being adapted to be superimposed on the radially outer surface of the annular tyre structure.

Preferably provision is made for a movement group operatively interposed between the support structure and the shoes in order to close or open the shoes with respect to each other.

The Applicant deems that adjusting the relative position of the feelers of each shoe in order to grasp the annular tyre structure allows adapting the grip apparatus to the geometric characteristics of the specific tyre being processed, facilitating a more precise and stable engagement of the latter for the purpose of its movement and/or transfer in the absence of deformations. Since the building of tyres requires assembling two or more annular structures or building an annular structure on others already arranged, improving the mutual positioning involves an improvement of the finished tyre quality. In addition, the adjustment can be automated and is advantageous above all in the case of small production batches, since in the passage from one production batch to the other, it is not necessary to intervene to substitute the shoes, reducing the set-up times, the number of components that must be kept in storage, the overall cost of the plant and the logistical problems.

In one or more of the indicated aspects, the present invention can comprise one or more of the following characteristics.

Preferably provision is made for opening the shoes and releasing the annular tyre structure.

Preferably provision is made for maintaining the relative position of the feelers of each shoe and repeating the actions d)-e) in order to grasp another annular tyre structure having said first grip diameter.

Preferably provision is made for arranging an annular tyre structure having a radially outer surface with, in a plane perpendicular to the respective tyre axis, a second grip diameter different from said first grip diameter.

Preferably provision is made for adjusting the relative position of the feelers of each shoe in a manner such that, in a plane perpendicular to the grip axis, the contact zones of a shoe are tangent to a same second adjustment circumference having a diameter equal to said second grip diameter, said second adjustment circumference being adapted to be superimposed on the radially outer surface of the annular tyre structure.

Preferably provision is made for repeating the actions d)-e) in order to grasp said annular tyre structure having said second grip diameter.

The Applicant deems that the adjustment of the feelers carried out with each modification, even limited, of the geometric characteristics of the annular tyre structure allows improving the grip, with positive repercussions on the quality of the finished tyre.

Preferably the action c) comprises moving at least one feeler of a shoe, maintaining stopped at least one feeler of the same shoe.

Preferably said adjustment device is operatively connected to at least one feeler of the respective shoe in order to move it with respect to at least one feeler of the same shoe.

The Applicant deems that the movement of at least one feeler with respect to the other feelers of a shoe allows simplifying the adjustment step, maintaining defined and certain the point of contact between the grip apparatus and the annular tyre structure.

Preferably each shoe comprises at least three feelers and the action c) comprises moving at least one feeler of a shoe, maintaining stopped at least two feelers of the same shoe.

Preferably each shoe comprises at least three feelers.

Preferably said adjustment device is operatively connected to at least one feeler of the respective shoe in order to move it with respect to at least two feelers of the same shoe.

The Applicant deems that maintaining two feelers fixed simplifies the adjustment step without negatively affecting the relative positioning precision.

Preferably each shoe comprises four feelers and the action c) comprises moving two feelers of a shoe with respect to the remaining two feelers of the same shoe.

Preferably each shoe comprises four feelers.

Preferably said adjustment device is operatively connected to two feelers of the respective shoe in order to move them with respect to the remaining two feelers of the same shoe.

The Applicant deems that arranging four feelers, including two feelers that are movable with respect to the remaining, allows circumferentially extending the shoes, limiting the number thereof even if obtaining high adjustment and hence gripping precision.

Preferably each shoe comprises a main portion and a lateral portion circumferentially adjacent to the main portion.

Preferably said main portion comprises at least one feeler and said lateral portion comprises at least one feeler.

Still more preferably, said main portion comprises two feelers and said lateral portion comprises at least one feeler.

Preferably the action c) comprises moving said lateral portion with respect to the main portion.

Preferably said adjustment device is operatively interposed between said main portion and said lateral portion in order to move the lateral portion with respect to the main portion.

The Applicant deems that the division of the shoe allows attaining the movement of the feelers, limiting excessive structural complications of the grip apparatus.

Preferably each shoe comprises a main portion, a lateral portion arranged circumferentially adjacent to a first side of the main portion and a lateral portion arranged circumferentially adjacent to a second side of the main portion opposite said first side.

Preferably said main portion comprises at least one feeler and each lateral portion comprises respectively at least one feeler.

Preferably the action c) comprises moving each lateral portion with respect to the main portion.

Preferably said adjustment device is operatively interposed between said main portion and said lateral portions in order to move each lateral portion with respect to the main portion.

Preferably said main portion has two feelers and each lateral portion comprises respectively a feeler.

The Applicant deems that a symmetrical division of the shoe facilitates the precision of the adjustment, simplifying the structure and operation thereof.

Preferably the two lateral portions are moved with respect to the main portion by means of a synchronous and symmetrical movement.

Preferably said adjustment device comprises a motor member and a transmission system configured for moving the two lateral portions with respect to the main portion by means of a synchronous and symmetrical movement.

The Applicant deems that a synchronous and symmetrical movement facilitates the positioning along the desired adjustment circumference.

Preferably each lateral portion is hinged to the respective main portion along a rotation axis parallel to the grip axis.

Preferably moving the lateral portion comprises rotating the lateral portion around said rotation axis.

Preferably said adjustment device is configured for rotating the lateral portion around said rotation axis.

Preferably the action e) comprises blocking said lateral portion with respect to said main portion and radially moving said main portion with respect to a support structure of said grip apparatus.

Preferably said movement group is operatively connected to said main portion in order to move it with respect to said support structure along a radial direction with respect to said grip axis.

The Applicant deems that dividing the adjustment motion, entrusted to the lateral portions, from the approaching/moving away motion, entrusted to the main portion, allows optimizing the components and the operation thereof.

Preferably the action e) comprises radially moving at least one shoe close to the annular tyre structure.

Preferably said movement group comprises an actuator for each shoe configured for moving said shoe along a radial direction with respect to said grip axis.

Preferably said grip apparatus comprises two diametrically opposite shoes.

Preferably the action e) comprises relatively moving the two shoes close together along a same radial direction with respect to said grip axis.

Preferably said movement group is configured for relatively moving the two shoes close to or away from each other along a same radial direction with respect to said grip axis.

The Applicant deems that providing for a grip apparatus of the type with two shoes provided with adjustable feelers joins adjustment effectiveness and structural simplicity.

Preferably the action e) comprises moving each shoe independently from the others.

The Applicant deems that by independently moving the shoes it is possible to be adapted to height variations between the pickup point and the release point of the annular tyre structure.

Preferably each shoe forms a cylindrical shell sector that is axially extended along the grip axis and which is adapted to be arranged around an angular portion of an annular tyre structure.

Preferably said feelers are attained by means of inserts applied on a radially inner surface of said cylindrical shell sector.

Preferably each feeler is attained so as to present a contact zone extended along the grip axis.

Preferably the extended contact zone can be continuous along the grip axis. Alternatively the extended contact zone can be discontinuous along the grip axis.

Preferably the feelers of a shoe are circumferentially distributed in a manner such that the two circumferentially more external feelers are arranged at an angular distance smaller than 180°, in a range of grip diameters comprised between 500mm and 720mm.

Preferably the feelers of a shoe are circumferentially distributed in a manner such that the two circumferentially more external feelers are arranged at an angular distance greater than 90°, in a range of grip diameters comprised between 500mm and 720mm.

By providing for at least three feelers in a shoe, preferably two circumferentially successive feelers are arranged at an angular distance comprised between 45° and 60°, in a range of grip diameters comprised between 500mm and 720mm.

Preferably the annular tyre structure is a carcass sleeve.

Preferably the motor member is a rotary actuator. Alternatively the motor member is a linear actuator.

Preferably the transmission system comprises a thrust arm for each lateral portion.

Preferably the thrust arms are slidably mounted on the main portion.

Preferably the motor member is operatively connected to the thrust arms so as to cause a synchronous and opposite translation thereof.

Preferably the transmission system comprises a motion reversal member operatively connected to the thrust arms and to the motor member.

Preferably the motion reverse member is attained by means of a pinion interposed between two racks, each associated with a thrust arm.

Preferably the motor member is directly connected to the pinion. Alternatively the motor member is directly connected to one of the two thrust arms.

Preferably each thrust arm has an end operatively associated with a lateral portion in order to move it with respect to the main portion.

Preferably the thrust arms are articulated in order to allow the rotation of the respective lateral portion around the rotation axis. Still more preferably, at least one articulation of each thrust arm is attained by means of a tie rod configured for allowing the setting of a reference position between the main portion and the lateral portions.

Preferably provision is made for closing the shoes against a cylindrical body having outer diameter equal to said first grip diameter and adjusting the relative position of the main portion and of the lateral portion, preferably by means of said tie rod.

Further characteristics will be more evident from the following detailed description.

Such description will be set forth hereinbelow with reference to the enclosed drawings, provided merely as a non-limiting example, in which:
- figure 1 schematically shows a perspective view of a grip apparatus for grasping an annular tyre structure;
- figure 2 shows a front view of the grip apparatus of figure 1;
- figure 3 and figure 4 illustrate the grip apparatus respectively of figure 1 and figure 2 in a first operating condition;
- figure 5 and figure 6 illustrate the grip apparatus respectively of figure 1 and figure 2 in a second operating condition;
- figure 7 illustrates the grip apparatus of figure 2 in a third operating condition;
- figure 8 and figure 9 illustrate the grip apparatus respectively of figure 1 and figure 2 in a fourth operating condition;
- figure 10 illustrates an enlarged detail of figure 1.

With reference to the enclosed figures, reference number 1 overall indicates a grip apparatus for grasping an annular tyre structure 100.

The annular tyre structure 100 is circumferentially extended around a tyre axis "P" and has a radially outer surface 101. The radially outer surface 101 is extended along the tyre axis "P" and has, in a plane perpendicular to the tyre axis "P", a grip diameter. Preferably the tyre structure 100 has substantially cylindrical shape.

The grip apparatus 1 is adapted to grasp annular tyre structures 100 having different grip diameters, for example at least one annular tyre structure having a first grip diameter D1 and at least one annular tyre structure having a second grip diameter D2 different from D1. Preferably the grip apparatus is adapted to grasp an annular tyre structure having grip diameter comprised between 500 mm and 720 mm.

The grip apparatus 1 comprises a support structure 2 carrying at least two shoes 3.

The grip apparatus 1 also comprises a movement group 4 operatively interposed between the support structure 2 and the shoes 3 in order to close or open the shoes themselves with respect to each other.

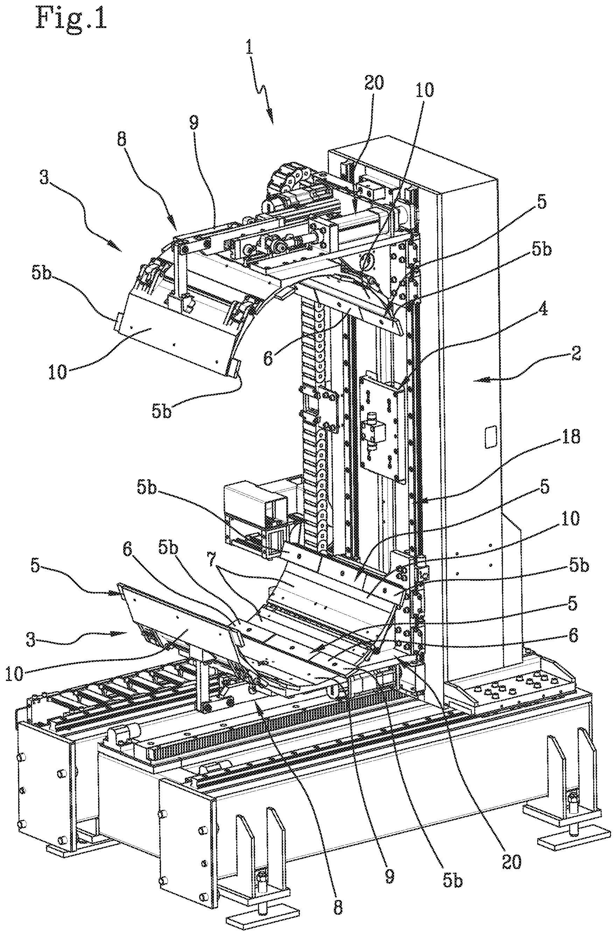

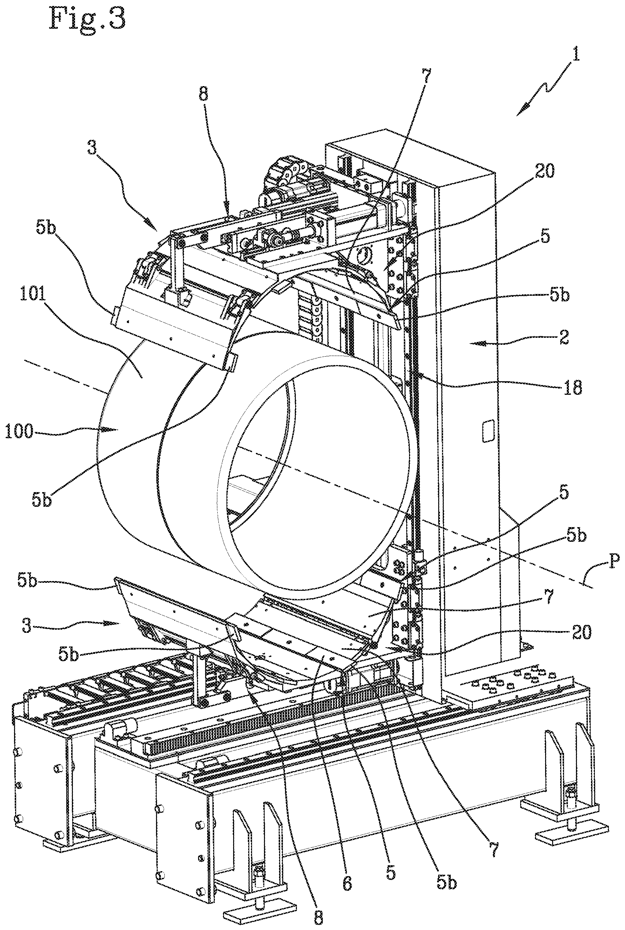

A plurality of feelers 5 (figures 1-3 and 10) are carried by the shoes 3. When the shoes 3 - being closed - grasp (as will be described hereinbelow) said annular tyre structure 100 by means of said feelers 5, these are circumferentially distributed around a grip axis "X" coinciding with said tyre axis "P". The grip axis "X" is preferably arranged in a horizontal plane.

Each shoe 3 comprises at least two feelers 5 of the aforesaid plurality of feelers. In accordance with a possible embodiment each shoe comprises at least three feelers 5, preferably four feelers 5.

Each feeler 5 has, in a plane perpendicular to the grip axis "X", a contact zone 6 (figures 1-3) corresponding to a portion of the feeler directed towards the grip axis "X" and intended to be abutted against the radially outer surface 101 of the annular tyre structure 100.

Preferably each feeler 5 is attained so as to have a contact zone 6 extended along the grip axis "X". The extended contact zone 6 can be continuous or discontinuous along the grip axis "X".

Preferably the feelers 5 of a shoe 3 are circumferentially distributed in a manner such that the two circumferentially more external feelers are arranged at an angular distance smaller than 180°, in a range of grip diameters comprised between 500mm and 720mm.

Preferably the feelers 5 of a shoe 3 are circumferentially distributed in a manner such that the two circumferentially more external feelers are arranged at an angular distance greater than 90°, in a range of grip diameters comprised between 500mm and 720mm.

By providing for at least three feelers 5 in a shoe 3, preferably two circumferentially successive feelers are arranged at an angular distance comprised between 45° and 60°, in a range of grip diameters comprised between 500mm and 720mm.

Preferably each shoe 3 forms a cylindrical shell sector, for example a cylindrical half-shell, that is axially extended along the grip axis "X" and is adapted to be arranged around an angular portion of the annular tyre structure 100. Still more preferably the feelers 5 are attained by means of inserts applied on a radially inner surface 7 (figures 1-3) of the cylindrical shell sector. For example, each feeler 5 comprises at least one listel 5a (figures 1-3 and 10) arranged parallel to the grip axis "X". Each listel 5a can be extended to cover the axial extension of the respective shell sector, or it can cover a part of the axial extension, possibly providing for two or more listels 5b along a same direction parallel to the grip axis "X". According to the example illustrated in the figures, a feeler 5 comprises at least two listels 5b arranged along the same direction parallel to the grip axis "X" so as to project externally from the respective cylindrical shell sector.

Preferably the movement group 4 is configured for moving each shoe 3 independently from the others, for example by providing for an actuator for each shoe 3. Preferably the movement group 4 is configured for moving each shoe 3 along a radial direction with respect to the grip axis "X".

Each shoe 3 comprises an adjustment device 8 configured for adjusting the relative position of the feelers 5 of the respective shoe. Preferably the adjustment device 8 is operatively connected to at least one feeler 5 of the respective shoe 3 in order to move it with respect to at least one other feeler 5 of the same shoe 3.

In the event in which each shoe comprises at least three feelers 5, the adjustment device 8 is operatively connected to at least one feeler 5 of the respective shoe 3 in order to move it with respect to at least two feelers 5 of the same shoe 3.

In the event in which each shoe comprises four feelers 5, the adjustment device 8 is operatively connected to two feelers of the respective shoe 3 in order to move them with respect to the remaining two feelers of the same shoe 3.

In accordance with a possible embodiment each shoe 3, preferably in the form of cylindrical shell sector, comprises a main portion 9 and at least one lateral portion 10 arranged circumferentially adjacent to the main portion 9. Preferably each shoe 3 comprises a main portion 9, a lateral portion 10 arranged circumferentially adjacent to a first side of the main portion 9 and a lateral portion 10 arranged circumferentially adjacent to a second side of the main portion 9, opposite the first side.

The movement group 4 is operatively connected to the main portion 9 in order to move it with respect to the support structure 2 along a radial direction with respect to the grip axis "X".

The main portion 9 comprises at least one feeler 5, preferably two feelers 5.

Each lateral portion 10 comprises at least one feeler 5, preferably a feeler 5.

The adjustment device 8 is operatively interposed between the main portion 9 and the lateral portion/portions 10 in order to move the lateral portion/portions 10 with respect to the main portion 9.

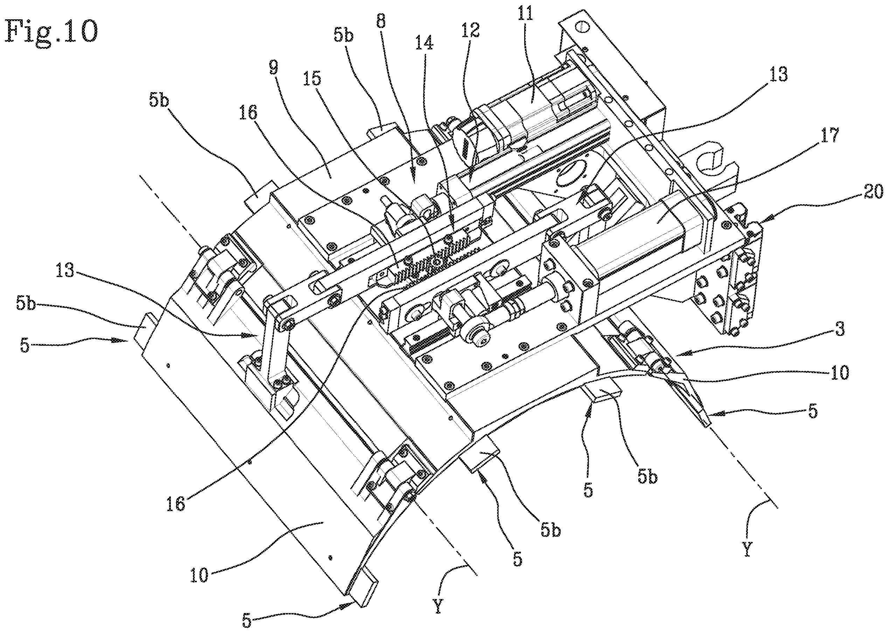

Preferably the lateral portion/portions 10 is/are hinged to the main portion 9 along a rotation axis "Y" parallel to the grip axis "X". The adjustment device 8 is configured for rotating the lateral portion/portions 10 around the rotation axis "Y" (figure 10).

Preferably the adjustment device 8 is configured for moving the two lateral portions 10 with respect to the main portion 9 by means of a synchronous and symmetrical movement.

As is for example illustrated in figure 10, the adjustment device 8 comprises a single motor member 11, preferably mounted on the main portion 9, and a transmission system 12 configured for moving the two lateral portions 10 with respect to the main portion 9 by means of a synchronous and symmetrical movement.

Preferably the motor member 11 is a rotary actuator. Alternatively the motor member 11 is a linear actuator.

Preferably the transmission system 12 comprises a thrust arm 13 for each lateral portion 10. The thrust arms 13 are slidably mounted on the main portion 9 and the motor member 11 is operatively connected to the thrust arms 13 so as to cause a synchronous and opposite translation thereof.

Preferably the transmission system 12 comprises a motion reversal member 14 operatively connected to the thrust arms 13 and to the motor member 11. For example, the motion reversal member is attained by means of a pinion 15 interposed between two racks 16, each associated with a thrust arm 13.

If the motor member 11 is a rotary actuator, the latter can be directly connected to the pinion 15 or to one of the two thrust arms 13, for example by means of a conversion device 17 configured for converting the rotary motion of the motor member 11 into linear motion of the thrust arm 13.

The conversion device 17 is for example attained by means of a screw-nut screw system.

If the motor member 11 is a linear actuator, the latter can be directly connected to one of the two thrust arms 13.

Each thrust arm 13 has an end operatively associated with a lateral portion 10 in order to move it with respect to the main portion 9. Preferably the thrust arms 13 are articulated in order to allow the rotation of the respective lateral portion 10 around the rotation axis "Y". Still more preferably, at least one articulation of each thrust arm 13 is attained by means of a tie rod configured for allowing the setting of a reference position between the main portion 9 and the lateral portions 10, and in such manner the tie rod allows adjusting the lateral portions 10, rendering them symmetric.

The enclosed figures illustrate a preferred embodiment having two shoes 3 arranged in diametrically opposite positions. Preferably each of the two shoes 3 forms a cylindrical half-shell adapted to be arranged around an angular portion of the annular tyre structure 100. Still more preferably the grip apparatus 1 comprises a lower shoe 3 and an upper shoe 3.

In accordance with this preferred embodiment, the movement group 4 is preferably configured for relatively moving the two shoes 3 close to or away from each other along a same radial direction with respect to the grip axis "X", preferably along a vertical direction.

Preferably each shoe 3 of the preferred embodiment comprises at least three feelers 5, preferably four feelers 5.

Preferably each shoe 3 of the preferred embodiment comprises the main portion 9, the lateral portion 10 arranged circumferentially adjacent to the first side of the main portion 9 and the lateral portion 10 arranged circumferentially adjacent to the second side of the main portion 9, opposite the first side. Preferably the main portion 9 has two feelers 5, each lateral portion 10 comprises respectively at least one feeler 5 (preferably a feeler 5) and the adjustment device 8 is operatively interposed between the main portion 9 and the lateral portions 10 in order to move each lateral portion 10 with respect to the main portion 9.

The adjustment device 8 is preferably configured for moving the two lateral portions 10 with respect to the main portion 9 by means of a synchronous and symmetrical movement and comprises the motor member 11 and the transmission system 12 as described above.

In accordance with the preferred embodiment illustrated in the enclosed figures, the support structure 2 preferably has a guide 18, preferably vertical, and each of the two shoes 3 is slidably mounted on the guide 18 for example by means of a slide 20. Preferably the movement group 4 is configured for moving each shoe 3 independently from the other, for example by providing for a motor member for each shoe 3.

The use of the grip apparatus implements a method for grasping an annular tyre structure in which provision is made for arranging the annular tyre structure 100 having the first grip diameter D1 (action a)) and the grip apparatus 1 (action b)). Preferably the annular tyre structure 100 is a carcass sleeve, therefore the use of the grip apparatus implements a method for grasping a carcass sleeve.

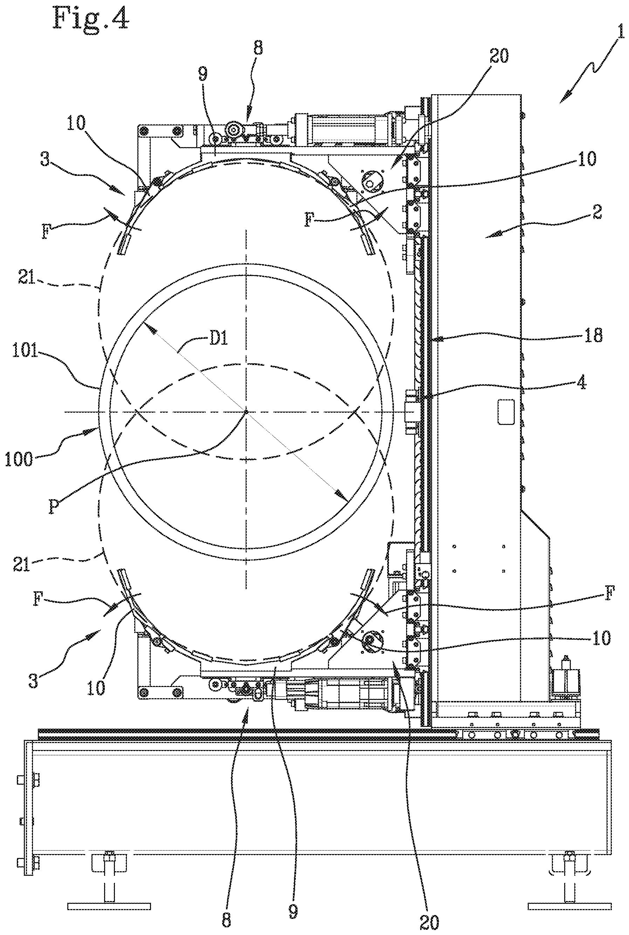

In accordance with an action c), the relative position of the feelers 5 of each shoe 3 is adjusted in a manner such that, in a plane perpendicular to the grip axis "X", the respective contact zones 6 are tangent to a same first adjustment circumference 21 (figure 4) having a diameter equal to the first grip diameter D1. The first adjustment circumference 21 is adapted to be superimposed on the radially outer surface 101 of the annular tyre structure 100.

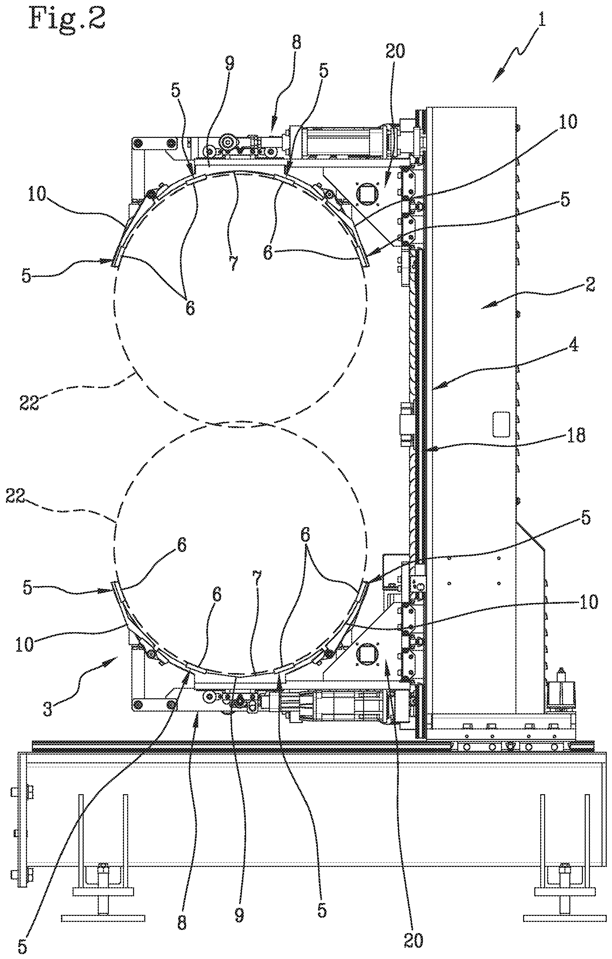

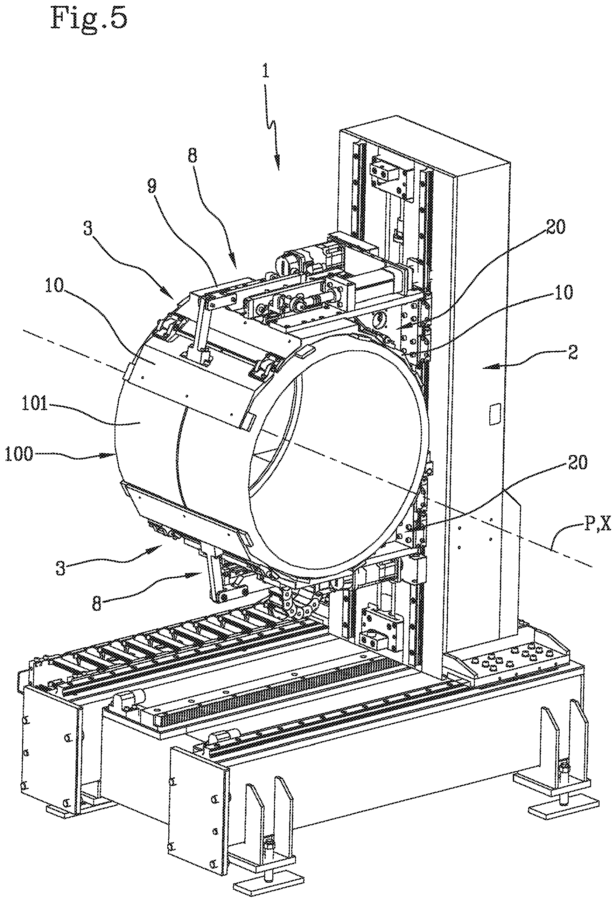

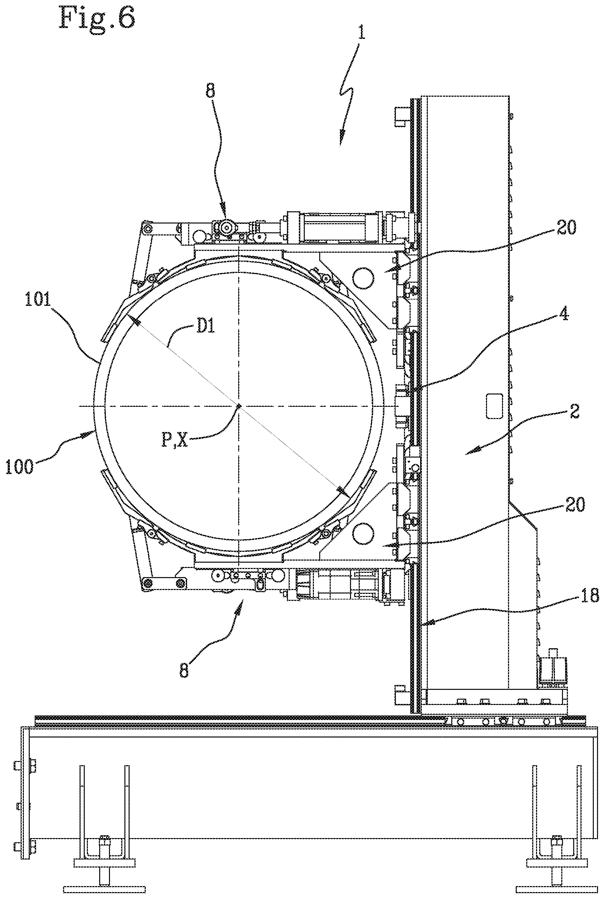

For example, figures 1 and 2 illustrate an operating condition in which the feelers 5 of a shoe 3 are tangent to a same circumference 22 having a diameter smaller than the first grip diameter D1. In figure 4, the first adjustment circumference 21 is traced, having a diameter equal to the first grip diameter D1. The relative position of the feelers 5 of each shoe 3 is adjusted, passing from the circumference 22 to the first adjustment circumference 21 as indicated by the arrows "F" of figure 4 before grasping the relative annular tyre structure 100 (figures 5 and 6).

In order to adjust the relative position of the feelers 5 of each shoe 3, in accordance with the action c) provision is made for moving at least one feeler 5 of a shoe, maintaining stopped at least one feeler 5 of the same shoe 3. If each shoe 3 comprises at least three feelers 5, the action c) comprises moving at least one feeler 5 of a shoe 3, maintaining stopped at least two feelers 5 of the same shoe 3. If each shoe 3 comprises four feelers 5, the action c) comprises moving two feelers 5 of a shoe 3 with respect to the remaining two feelers 5 of the same shoe 3.

If each shoe 3 comprises the main portion 9 and a lateral portion 10, the action c) comprises moving the lateral portion 10 with respect to the main portion 9. If each shoe 3 comprises the main portion 9 and two lateral portions 10, the action c) comprises moving each lateral portion 10 with respect to the main portion 9. Preferably the two lateral portions 10 are moved with respect to the main portion 9 by means of a synchronous and symmetrical movement.

If each lateral portion 10 is hinged to the respective main portion 9 along the rotation axis "Y", moving the lateral portion 10 comprises rotating the lateral portion 10 around the rotation axis "Y".

In accordance with an action d), the grip apparatus 1 and the annular tyre structure 100 are relatively positioned in a manner such that the shoes 3 are circumferentially around the annular tyre structure 100. The annular tyre structure 100 is for example carried on a radially outer surface of a building and/or transfer drum.

In accordance with an action e), provision is made for closing the shoes 3 against the annular tyre structure 100 until the contact zones 6 of the feelers 5 grasp the annular tyre structure 100, being abutted against the radially outer surface 101 (figures 5-6). The building and/or transfer drum, if present, is radially contracted and moved away in a manner such that the annular tyre structure 100 is retained by the grip apparatus 1.

The annular tyre structure 100 thus grasped is subjected to processing and/or transfers in order to then be released by opening shoes 3 with a movement opposite that actuated for closing them.

Preferably the action e) comprises radially moving at least one shoe 3 close to the annular tyre structure 100.

Preferably, at the end of the adjustment, the lateral portion/portions 10, if present, is/are blocked with respect to the main portion 9 and in order to close a shoe 3 provision is thus made for radially moving the respective main portion 9 with respect to the support structure 2 so as to integrally drive the lateral portion/portions 10.

In order to grasp another annular tyre structure 100 having the first grip diameter D1, provision is made for maintaining the relative position of the feelers 5 of each shoe 3 and for repeating the actions d)-e).

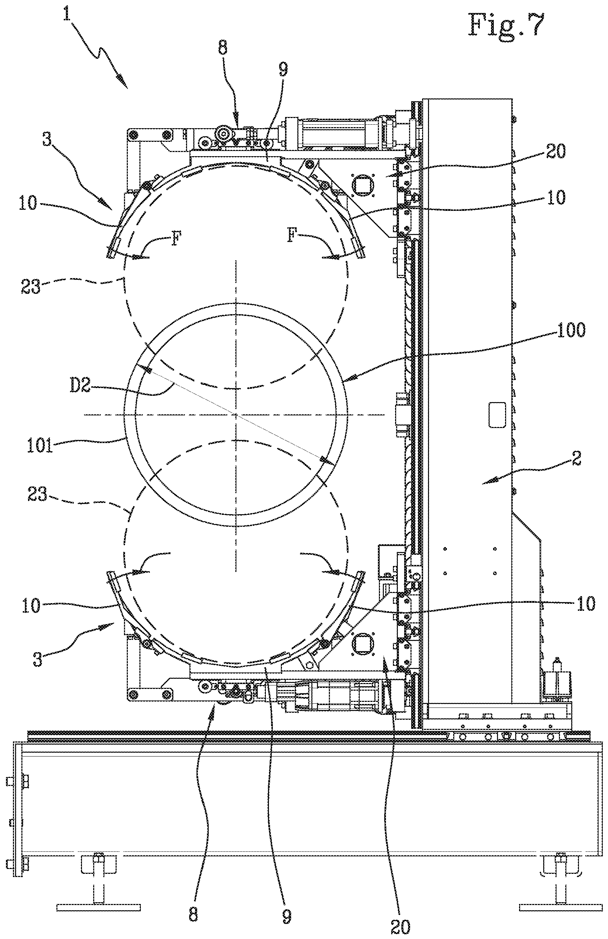

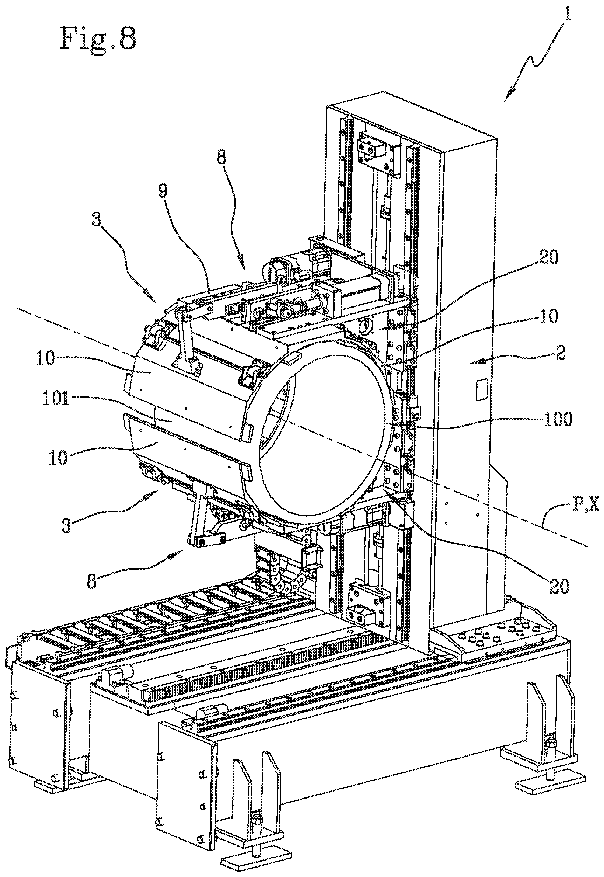

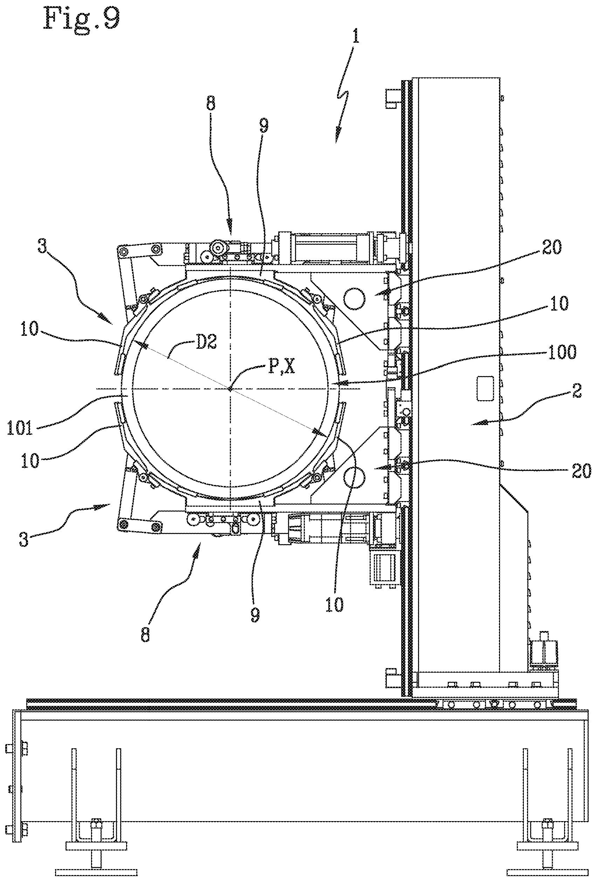

When an annular tyre structure 100 is arranged having a second grip diameter D2 different from the first grip diameter D1 (figure 7), the relative position of the feelers 5 of each shoe 3 is adjusted in a manner such that, in a plane perpendicular to the grip axis "X", the respective contact zones 6 are tangent to a same second adjustment circumference 23 having a diameter equal to the second grip diameter D2. The relative position of the feelers 5 of each shoe 3 is adjusted, passing from the first adjustment circumference 21 to the second adjustment circumference 23 as indicated by the arrows "F" of figure 7 before grasping the relative annular tyre structure 100 (figure 8 and 9).

The second adjustment circumference 23 is adapted to be superimposed on the radially outer surface 101 of the annular tyre structure 100. Then, provision is made for repeating the actions d)-e) in order to grasp such annular tyre structure 100 having the second grip diameter D2.

In accordance with the preferred embodiment illustrated for example in the enclosed figures, the adjustment of the relative position of the feelers 5 of each shoe 3 in accordance with the action c) provides for actuating the motor member 11, causing the sliding of a thrust arm 13 and hence of the respective rack 16. The presence of the pinion 15 obliges the other thrust arm 13 to slide synchronously and with opposite sense. A mutual moving apart of the thrust arms 13 generates a synchronous and symmetric rotation of the lateral portions 10 close to the grip axis "X" (figure 7). Such movement is generated when the grip diameter of the annular tyre structure to be grasped is smaller than the previously set grip diameter. A mutual approaching of the thrust arms 13 generates a synchronous and symmetric rotation of the lateral portions 10 moving away from the grip axis "X" (figure 4). Such movement is generated when the grip diameter of the annular tyre structure to be grasped is greater than the previously-set grip diameter. Once the relative position of the feelers 5 of each shoe 3 is set, the lateral portions 10 are blocked with respect to the main portion 9, for example by stopping the motor member 11 and maintaining the mutual positions.

According to the preferred embodiment for example illustrated in the figures, the grip axis "X" is horizontal, therefore the annular tyre structure 100 is introduced within the shoes 3 with tyre axis "P" horizontal.

In this case the action e) comprises relatively moving the two shoes 3 close together along a same radial direction with respect to the grip axis "X", in particular along the vertical direction. At least one of the two shoes 3 is moved by radially translating the main portion 9 with respect to the support structure 2 so as to integrally drive the lateral portions 10. As a function of the grip position of the tyre axis "P", the two shoes are moved simultaneously or one independently from the other.

Preferably, as preliminary action, provision is made for closing the shoes against a cylindrical body having outer diameter equal to the first grip diameter and adjusting the relative position of the main portion and of the lateral portion, preferably by means of the tie rod of the thrust arms 13.

## Claims

1. Method for grasping an annular tyre structure (100) comprising:
a) arranging an annular tyre structure (100) which is extended circumferentially around a tyre axis (P) and having a radially outer surface (101) having, in a plane perpendicular to said tyre axis (P), a first grip diameter (D1); **characterized by**
b) arranging a grip apparatus (1) comprising at least two shoes (3), each shoe (3) comprising at least two feelers (5) circumferentially distributed around a grip axis (X) and each having a contact zone (6) corresponding to a portion of the feeler (5) directed towards the grip axis (X);
c) adjusting the relative position of the feelers (5) of each shoe (3) in a manner such that, in a plane perpendicular to the grip axis (X), the contact zones (6) of the feelers (5) of a shoe (3) are tangent to a same first adjustment circumference (21) having a diameter equal to said first grip diameter (D1), said first adjustment circumference (21) being adapted to be superimposed on the radially outer surface (101) of the annular tyre structure (100);
d) relatively positioning said grip apparatus (1) and said annular tyre structure (100) in a manner such that said shoes (3) are circumferentially around said annular tyre structure (100);
e) closing the shoes (3) against the annular tyre structure (100) until the contact zones (6) of the feelers (5) grasp the annular tyre structure (100) by being abutted against the radially outer surface (101).

2. Method according to claim 1, comprising opening the shoes (3), releasing the annular tyre structure (100), maintaining the relative position of the feelers (5) of each shoe (3) and repeating the actions d)-e) in order to grasp another annular tyre structure (100) having said first grip diameter (D1).

3. Method according to claim 1, comprising:
opening the shoes (3) and releasing the annular tyre structure (100),
arranging an annular tyre structure (100) having a radially outer surface (101) having, in a plane perpendicular to the respective tyre axis (P), a second grip diameter (D2) different from said first grip diameter (D1),
adjusting the relative position of the feelers (5) of each shoe (3) in a manner such that, in a plane perpendicular to the grip axis (X), the contact zones (6) of a shoe (3) are tangent to a same second adjustment circumference (23) having a diameter equal to said second grip diameter (D2), said second adjustment circumference (23) being adapted to be superimposed on the radially outer surface (101) of the annular tyre structure (100),
repeating the actions d)-e) in order to grasp said annular tyre structure (100) having said second grip diameter (D2).

4. Method according to one or more of the preceding claims, wherein the action c) comprises moving at least one feeler (5) of a shoe (3), maintaining stopped at least one feeler (5) of the same shoe (3).

5. Method according to one or more of the preceding claims, wherein each shoe (3) comprises at least three feelers (5) and wherein the action c) comprises moving at least one feeler (5) of a shoe (3), maintaining stopped at least two feelers (5) of the same shoe (3).

6. Method according to one or more of the preceding claims, wherein each shoe (3) comprises four feelers (5) and wherein the action c) comprises moving two feelers (5) of a shoe (3) with respect to the remaining two feelers (5) of the same shoe (3).

7. Method according to claim 4, wherein each shoe (3) comprises a main portion (9) and a lateral portion (10) circumferentially adjacent to the main portion (9), said main portion (9) comprising at least one feeler (5) and said lateral portion (10) comprising at least one feeler (5), and wherein the action c) comprises moving said lateral portion (10) with respect to the main portion (9).

8. Method according to claim 5, wherein each shoe (3) comprises a main portion (9) and a lateral portion (10) circumferentially adjacent to the main portion (9), said main portion (9) comprising two feelers (5) and said lateral portion (10) comprising at least one feeler (5), and wherein the action c) comprises moving said lateral portion (10) with respect to the main portion (9).

9. Method according to one or more of the preceding claims, wherein each shoe (3) comprises a main portion (9), a lateral portion (10) arranged circumferentially adjacent to a first side of the main portion (9) and a lateral portion (10) arranged circumferentially adjacent to a second side of the main portion (9) opposite said first side, said main portion (9) comprising at least one feeler (5) and each lateral portion (10) respectively comprising at least one feeler (5), and wherein the action c) comprises moving each lateral portion (10) with respect to the main portion (9).

10. Method according to one or more of claims 7 to 9, wherein each lateral portion (10) is hinged to the respective main portion (9) along a rotation axis (Y) parallel to the grip axis (X) and wherein moving the lateral portion (10) comprises rotating the lateral portion (10) around said rotation axis (Y).

11. Method according to one or more of claims 7 to 10, wherein the action e) comprises locking said lateral portion (10) with respect to said main portion (9) and radially moving said main portion (9) with respect to a support structure (2) of said grip apparatus (1).

12. Grip apparatus for grasping an annular tyre structure (100) having a radially outer surface (101), comprising:
a support structure (2) carrying at least two shoes (3);
**characterized in that**
each shoe (3) has at least two feelers (5) circumferentially distributed around a grip axis (X), wherein each feeler (5) has a contact zone (6) corresponding to a portion of the feeler (5) directed towards the grip axis (X);
wherein each shoe (3) comprises an adjustment device (8) configured for adjusting the relative position of said at least two feelers (5) in a manner such that in a plane perpendicular to the grip axis (X), the contact zones (6) of the feelers (5) of a shoe (3) are tangent to a same first adjustment circumference (21) having a diameter equal to a first grip diameter (D1) of said annular tyre structure (100), said first adjustment circumference (21) being adapted to be superimposed on the radially outer surface (101) of the annular tyre structure (100);
and **characterized by** a movement group (4) operatively interposed between the support structure (2) and the shoes (3) in order to close or open shoes (3) with respect to each other.

13. Grip apparatus according to claim 12, wherein said adjustment device (8) is operatively connected to at least one feeler (5) of the respective shoe (3) in order to move it with respect to at least one feeler (5) of the same shoe (3).

14. Grip apparatus according to claim 13, wherein each shoe (3) comprises a main portion (9) and a lateral portion (10) arranged circumferentially adjacent to the main portion (9), said main portion (9) comprising at least one feeler (5) and said lateral portion (10) comprising at least one feeler (5), and wherein said adjustment device (8) is operatively interposed between said main portion (9) and said lateral portion (10) in order to move the lateral portion (10) with respect to the main portion (9).

15. Grip apparatus according to claim 14 , comprising two diametrically opposite shoes (3) and wherein said movement group (4) is configured for relatively moving the two shoes (3) close to or away from each other along a same radial direction with respect to said grip axis (X).

## Patentansprüche

1. Verfahren zum Greifen einer ringförmigen Reifenstruktur (100), umfassend:
a) Anordnen einer ringförmigen Reifenstruktur (100), die sich in Umfangsrichtung um eine Reifenachse (P) erstreckt und eine radial äußere Oberfläche (101) aufweist, die in einer Ebene senkrecht zu der Reifenachse (P) einen ersten Greifdurchmesser (D1) aufweist; **gekennzeichnet durch**
b) Anordnen einer Greifeinrichtung (1), die mindestens zwei Schuhe (3) umfasst, wobei jeder Schuh (3) mindestens zwei Fühler (5) umfasst, die in Umfangsrichtung um eine Greifachse (X) verteilt sind und jeweils eine Kontaktzone (6) aufweist, die einem Abschnitt des Fühlers (5) entspricht, der in Richtung der Greifachse (X) gerichtet ist;
c) Einstellen der relativen Position der Fühler (5) jedes Schuhs (3) derart, dass in einer Ebene senkrecht zur Greifachse (X) die Kontaktzonen (6) der Fühler (5) eines Schuhs (3) tangential zu einem gleichen ersten Einstellumfang (21) sind, der einen Durchmesser aufweist, der gleich dem ersten Greifdurchmesser (D1) ist, wobei der erste Einstellumfang (21) so angepasst ist, dass er die radial äußere Oberfläche (101) der ringförmigen Reifenstruktur (100) überlagert;
d) relatives Positionieren der Greifeinrichtung (1) und der ringförmigen Reifenstruktur (100) derart, dass sich die Schuhe (3) in Umfangsrichtung um die ringförmige Reifenstruktur (100) befinden;
e) Schließen der Schuhe (3) gegen die ringförmige Reifenstruktur (100), bis die Kontaktzonen (6) der Fühler (5) die ringförmige Reifenstruktur (100) greifen, indem sie an die radial äußere Oberfläche (101) anliegen.

2. Verfahren nach Anspruch 1, umfassend Öffnen der Schuhe (3), Freigeben der ringförmigen Reifenstruktur (100), Beibehalten der relativen Position der Fühler (5) jedes Schuhs (3) und Wiederholen der Handlungen d)-e), um eine andere ringförmige Reifenstruktur (100) zu greifen, die den ersten Greifdurchmesser (D1) aufweist.

3. Verfahren nach Anspruch 1, umfassend:
Öffnen der Schuhe (3) und Freigeben der ringförmigen Reifenstruktur (100),
Anordnen einer ringförmigen Reifenstruktur (100), die eine radial äußere Oberfläche (101) aufweist, die in einer Ebene senkrecht zu der jeweiligen Reifenachse (P) einen zweiten Greifdurchmesser (D2) aufweist, der sich von dem ersten Greifdurchmesser (D1) unterscheidet,
Einstellen der relativen Position der Fühler (5) jedes Schuhs (3) derart, dass in einer Ebene senkrecht zur Greifachse (X) die Kontaktzonen (6) eines Schuhs (3) tangential zu einem gleichen zweiten Einstellumfang (23) sind, der einen Durchmesser aufweist, der gleich dem zweiten Greifdurchmesser (D2) ist, wobei der zweite Einstellumfang (23) so angepasst ist, dass er die radial äußere Oberfläche (101) der ringförmigen Reifenstruktur (100) überlagert,
Wiederholen der Handlungen d)-e), um die ringförmige Reifenstruktur (100), die den zweiten Greifdurchmesser (D2) aufweist, zu greifen.

4. Verfahren nach einem oder mehreren der vorstehenden Ansprüche, wobei die Handlung c) Bewegen mindestens eines Fühlers (5) eines Schuhs (3) umfasst, wobei mindestens ein Fühler (5) desselben Schuhs (3) im Stillstand gehalten wird.

5. Verfahren nach einem oder mehreren der vorstehenden Ansprüche, wobei jeder Schuh (3) mindestens drei Fühler (5) umfasst und wobei die Handlung c) Bewegen mindestens eines Fühlers (5) eines Schuhs (3) umfasst, wobei mindestens zwei Fühler (5) desselben Schuhs (3) im Stillstand gehalten werden.

6. Verfahren nach einem oder mehreren der vorstehenden Ansprüche, wobei jeder Schuh (3) vier Fühler (5) umfasst und wobei die Handlung c) Bewegen von zwei Fühlern (5) eines Schuhs (3) in Bezug auf die verbleibenden zwei Fühler (5) desselben Schuhs (3) umfasst.

7. Verfahren nach Anspruch 4, wobei jeder Schuh (3) einen Hauptabschnitt (9) und einen Seitenabschnitt (10), der in Umfangsrichtung an den Hauptabschnitt (9) angrenzt, umfasst, wobei der Hauptabschnitt (9) mindestens einen Fühler (5) umfasst und der Seitenabschnitt (10) mindestens einen Fühler (5) umfasst, und wobei die Handlung c) Bewegen des Seitenabschnitts (10) in Bezug auf den Hauptabschnitt (9) umfasst.

8. Verfahren nach Anspruch 5, wobei jeder Schuh (3) einen Hauptabschnitt (9) und einen Seitenabschnitt (10), der in Umfangsrichtung an den Hauptabschnitt (9) angrenzt, umfasst, wobei der Hauptabschnitt (9) zwei Fühler (5) umfasst und der Seitenabschnitt (10) mindestens einen Fühler (5) umfasst, und wobei die Handlung c) Bewegen des Seitenabschnitts (10) in Bezug auf den Hauptabschnitt (9) umfasst.

9. Verfahren nach einem oder mehreren der vorstehenden Ansprüche, wobei jeder Schuh (3) einen Hauptabschnitt (9), einen Seitenabschnitt (10), der in Umfangsrichtung angrenzend an eine erste Seite des Hauptabschnitts (9) angeordnet ist, und einen Seitenabschnitt (10), der in Umfangsrichtung angrenzend an eine zweite Seite des Hauptabschnitts (9) gegenüber der ersten Seite angeordnet ist, umfasst, wobei der Hauptabschnitt (9) mindestens einen Fühler (5) umfasst und jeder Seitenabschnitt (10) jeweils mindestens einen Fühler (5) umfasst, und wobei die Handlung c) Bewegen jedes Seitenabschnitts (10) in Bezug auf den Hauptabschnitt (9) umfasst.

10. Verfahren nach einem oder mehreren der Ansprüche 7 bis 9, wobei jeder Seitenabschnitt (10) an dem jeweiligen Hauptabschnitt (9) entlang einer Drehachse (Y) parallel zur Greifachse (X) gelenkig verbunden ist und wobei Bewegen des Seitenabschnitts (10) Drehen des Seitenabschnitts (10) um die Drehachse (Y) umfasst.

11. Verfahren nach einem oder mehreren der Ansprüche 7 bis 10, wobei die Handlung e) Verriegeln des Seitenabschnitts (10) in Bezug auf den Hauptabschnitt (9) und radiales Bewegen des Hauptabschnitts (9) in Bezug auf eine Stützstruktur (2) der Greifeinrichtung (1) umfasst.

12. Greifeinrichtung zum Greifen einer ringförmigen Reifenstruktur (100), die eine radial äußere Oberfläche (101) aufweist, umfassend:
eine Stützstruktur (2), die mindestens zwei Schuhe (3) trägt;
**dadurch gekennzeichnet, dass**
jeder Schuh (3) mindestens zwei Fühler (5) aufweist, die in Umfangsrichtung um eine Greifachse (X) verteilt sind, wobei jeder Fühler (5) eine Kontaktzone (6) aufweist, die einem Abschnitt des Fühlers (5) entspricht, der in Richtung der Greifachse (X) gerichtet ist;
wobei jeder Schuh (3) eine Einstellvorrichtung (8) umfasst, die zum Einstellen der relativen Position der mindestens zwei Fühler (5) derart konfiguriert ist, dass in einer Ebene senkrecht zu der Greifachse (X) die Kontaktzonen (6) der Fühler (5) eines Schuhs (3) tangential zu einem gleichen ersten Einstellumfang (21) sind, der einen Durchmesser aufweist, der gleich einem ersten Greifdurchmesser (D1) der ringförmigen Reifenstruktur (100) ist, wobei der erste Einstellumfang ( 21) so angepasst ist, dass er die radial äußere Oberfläche (101) der ringförmigen Reifenstruktur (100) überlagert;
und **gekennzeichnet durch** eine Bewegungsgruppe (4), die betriebsfähig zwischen der Stützstruktur (2) und den Schuhen (3) eingefügt ist, um Schuhe (3) in Bezug aufeinander zu schließen oder zu öffnen.

13. Greifeinrichtung nach Anspruch 12, wobei die Einstellvorrichtung (8) betriebsfähig mit mindestens einem Fühler (5) des jeweiligen Schuhs (3) verbunden ist, um ihn in Bezug auf mindestens einen Fühler (5) desselben Schuhs (3) zu bewegen.

14. Greifeinrichtung nach Anspruch 13, wobei jeder Schuh (3) einen Hauptabschnitt (9) und einen Seitenabschnitt (10) umfasst, der in Umfangsrichtung angrenzend an den Hauptabschnitt (9) angeordnet ist, wobei der Hauptabschnitt (9) mindestens einen Fühler (5) umfasst und der Seitenabschnitt (10) mindestens einen Fühler (5) umfasst, und wobei die Einstellvorrichtung (8) betriebsfähig zwischen dem Hauptabschnitt (9) und dem Seitenabschnitt (10) eingefügt ist, um den Seitenabschnitt (10) in Bezug auf den Hauptabschnitt (9) zu bewegen.

15. Greifeinrichtung nach Anspruch 14, umfassend zwei diametral gegenüberliegende Schuhe (3) und wobei die Bewegungsgruppe (4) so konfiguriert ist, dass sie die zwei Schuhe (3) nahe beieinander oder entfernt voneinander entlang einer gleichen radialen Richtung in Bezug auf die Greifachse (X) relativ bewegt.

## Revendications

1. Procédé de saisie d'une structure de pneu annulaire (100), comprenant :
a) la disposition d'une structure de pneu annulaire (100) qui s'étend circonférentiellement autour d'un axe de pneu (P) et présentant une surface radialement extérieure (101) présentant, dans un plan perpendiculaire audit axe de pneu (P), un premier diamètre de préhension (D1) ; **caractérisé par**
b) la disposition d'un appareil de préhension (1) comprenant au moins deux sabots (3), chaque sabot (3) comprenant au moins deux palpeurs (5) répartis circonférentiellement autour d'un axe de préhension (X) et présentant chacun une zone de contact (6) correspondant à une partie du palpeur (5) dirigée vers l'axe de préhension (X) ;
c) l'ajustement de la position relative des palpeurs (5) de chaque sabot (3) de manière à ce que, dans un plan perpendiculaire à l'axe de préhension (X), les zones de contact (6) des palpeurs (5) d'un sabot (3) soient tangentes à une même première circonférence d'ajustement (21) présentant un diamètre égal audit premier diamètre de préhension (D1), ladite première circonférence d'ajustement (21) étant adaptée pour être superposée sur la surface radialement extérieure (101) de la structure de pneu annulaire (100) ;
d) le positionnement relatif dudit appareil de préhension (1) et de ladite structure de pneu annulaire (100) de manière à ce que lesdits sabots (3) entourent circonférentiellement ladite structure de pneu annulaire (100) ;
e) la fermeture des sabots (3) contre la structure de pneu annulaire (100) jusqu'à ce que les zones de contact (6) des palpeurs (5) saisissent la structure de pneu annulaire (100) en étant en butée contre la surface radialement extérieure (101).

2. Procédé selon la revendication 1, comprenant l'ouverture des sabots (3), la libération de la structure de pneu annulaire (100), le maintien de la position relative des palpeurs (5) de chaque sabot (3) et la répétition des actions d)-e) afin de saisir une autre structure de pneu annulaire (100) présentant ledit premier diamètre de préhension (D1).

3. Procédé selon la revendication 1, comprenant :
l'ouverture des sabots (3) et la libération de la structure de pneu annulaire (100),
la disposition d'une structure de pneu annulaire (100) présentant une surface radialement extérieure (101) présentant, dans un plan perpendiculaire à l'axe de pneu respectif (P), un second diamètre de préhension (D2) différent dudit premier diamètre de préhension (D1),
l'ajustement de la position relative des palpeurs (5) de chaque sabot (3) de manière à ce que, dans un plan perpendiculaire à l'axe de préhension (X), les zones de contact (6) d'un sabot (3) soient tangentes à une même seconde circonférence d'ajustement (23) présentant un diamètre égal audit second diamètre de préhension (D2), ladite seconde circonférence d'ajustement (23) étant adaptée pour être superposée à la surface radialement extérieure (101) de la structure de pneu annulaire (100),
la répétition des actions d)-e) afin de saisir ladite structure de pneu annulaire (100) présentant ledit second diamètre de préhension (D2).

4. Procédé selon une ou plusieurs des revendications précédentes, dans lequel l'action c) comprend le déplacement d'au moins un palpeur (5) d'un sabot (3), en maintenant arrêté au moins un palpeur (5) du même sabot (3).

5. Procédé selon une ou plusieurs des revendications précédentes, dans lequel chaque sabot (3) comprend au moins trois palpeurs (5) et dans lequel l'action c) comprend le déplacement d'au moins un palpeur (5) d'un sabot (3), en maintenant arrêtés au moins deux palpeurs (5) d'un même sabot (3).

6. Procédé selon une ou plusieurs des revendications précédentes, dans lequel chaque sabot (3) comprend quatre palpeurs (5) et dans lequel l'action c) comprend le déplacement de deux palpeurs (5) d'un sabot (3) par rapport aux deux palpeurs (5) restants du même sabot (3).

7. Procédé selon la revendication 4, dans lequel chaque sabot (3) comprend une partie principale (9) et une partie latérale (10) circonférentiellement adjacente à la partie principale (9), ladite partie principale (9) comprenant au moins un palpeur (5) et ladite partie latérale (10) comprenant au moins un palpeur (5), et dans lequel l'action c) comprend le déplacement de ladite partie latérale (10) par rapport à la partie principale (9).

8. Procédé selon la revendication 5, dans lequel chaque sabot (3) comprend une partie principale (9) et une partie latérale (10) circonférentiellement adjacente à la partie principale (9), ladite partie principale (9) comprenant deux palpeurs (5) et ladite partie latérale (10) comprenant au moins un palpeur (5), et dans lequel l'action c) comprend le déplacement de ladite partie latérale (10) par rapport à la partie principale (9).

9. Procédé selon une ou plusieurs des revendications précédentes, dans lequel chaque sabot (3) comprend une partie principale (9), une partie latérale (10) disposée circonférentiellement adjacente à un premier côté de la partie principale (9) et une partie latérale (10) disposée circonférentiellement adjacente à un second côté de la partie principale (9) opposé audit premier côté, ladite partie principale (9) comprenant au moins un palpeur (5) et chaque partie latérale (10) comprenant respectivement au moins un palpeur (5), et dans lequel l'action c) comprend le déplacement de chaque partie latérale (10) par rapport à la partie principale (9).

10. Procédé selon une ou plusieurs des revendications 7 à 9, dans lequel chaque partie latérale (10) est articulée à la partie principale respective (9) le long d'un axe de rotation (Y) parallèle à l'axe de préhension (X) et dans lequel le déplacement de la partie latérale (10) comprend la rotation de la partie latérale (10) autour dudit axe de rotation (Y).

11. Procédé selon une ou plusieurs des revendications 7 à 10, dans lequel l'action e) comprend le verrouillage de ladite partie latérale (10) par rapport à ladite partie principale (9) et le déplacement radial de ladite partie principale (9) par rapport à une structure de support (2) dudit appareil de préhension (1).

12. Appareil de préhension pour saisir une structure de pneu annulaire (100) présentant une surface radialement extérieure (101), comprenant :
une structure de support (2) portant au moins deux sabots (3) ;
**caractérisé en ce que**
chaque sabot (3) présente au moins deux palpeurs (5) répartis circonférentiellement autour d'un axe de préhension (X), dans lequel chaque palpeur (5) présente une zone de contact (6) correspondant à une partie du palpeur (5) dirigée vers l'axe de préhension (X) ;
dans lequel chaque sabot (3) comprend un dispositif d'ajustement (8) configuré pour ajuster la position relative desdits au moins deux palpeurs (5) de manière à ce que, dans un plan perpendiculaire à l'axe de préhension (X), les zones de contact (6) des palpeurs (5) d'un sabot (3) soient tangentes à une même première circonférence d'ajustement (21) présentant un diamètre égal à un premier diamètre de préhension (D1) de ladite structure de pneu annulaire (100), ladite première circonférence d'ajustement (21) étant adaptée pour être superposée sur la surface radialement extérieure (101) de la structure de pneu annulaire (100) ;
et **caractérisé par** un groupe de mouvement (4) interposé de manière fonctionnelle entre la structure de support (2) et les sabots (3) afin de fermer ou d'ouvrir les sabots (3) les uns par rapport aux autres.

13. Appareil de préhension selon la revendication 12, dans lequel ledit dispositif d'ajustement (8) est relié de manière fonctionnelle à au moins un palpeur (5) du sabot (3) respectif afin de le déplacer par rapport à au moins un palpeur (5) du même sabot (3).

14. Appareil de préhension selon la revendication 13, dans lequel chaque sabot (3) comprend une partie principale (9) et une partie latérale (10) disposée circonférentiellement adjacente à la partie principale (9), ladite partie principale (9) comprenant au moins un palpeur (5) et ladite partie latérale (10) comprenant au moins un palpeur (5), et dans lequel ledit dispositif d'ajustement (8) est interposé de manière fonctionnelle entre ladite partie principale (9) et ladite partie latérale (10) afin de déplacer la partie latérale (10) par rapport à la partie principale (9).

15. Appareil de préhension selon la revendication 14, comprenant deux sabots (3) diamétralement opposés et dans lequel ledit groupe de déplacement (4) est configuré pour déplacer relativement les deux sabots (3) à proximité ou à l'écart l'un de l'autre selon une même direction radiale par rapport audit axe de préhension (X).
